(19) Europäisches Patentamt
European Patent Office
Office européen des brevets

(11) **EP 3 047 234 B1**

(12) **EUROPÄISCHE PATENTSCHRIFT**

(45) Veröffentlichungstag und Bekanntmachung des Hinweises auf die Patenterteilung:
**19.07.2017  Patentblatt 2017/29**

(21) Anmeldenummer: **14772285.4**

(22) Anmeldetag: **18.09.2014**

(51) Int Cl.:
**G01C 21/28** *(2006.01)*     **G01S 19/49** *(2010.01)*

(86) Internationale Anmeldenummer:
**PCT/EP2014/002533**

(87) Internationale Veröffentlichungsnummer:
**WO 2015/039755 (26.03.2015 Gazette 2015/12)**

(54) **VERFAHREN ZUR ERMITTLUNG EINER AKTUELLEN POSITION EINES KRAFTFAHRZEUGS IN EINEM GEODÄTISCHEN KOORDINATENSYSTEM UND KRAFTFAHRZEUG**

METHOD FOR DETERMINING A CURRENT POSITION OF A MOTOR VEHICLE IN A GEODETIC COORDINATE SYSTEM AND MOTOR VEHICLE

PROCÉDÉ DE DÉTERMINATION D'UNE POSITION ACTUELLE D'UN VÉHICULE AUTOMOBILE DANS UN SYSTÈME DE COORDONNÉES GÉODÉSIQUES ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2013   DE 102013015705**

(43) Veröffentlichungstag der Anmeldung:
**27.07.2016   Patentblatt 2016/30**

(73) Patentinhaber: **Audi AG**
**85045 Ingolstadt (DE)**

(72) Erfinder:
• **SIMON, Christina**
  **85051 Ingolstadt (DE)**
• **MICKLER, Florian**
  **85049 Ingolstadt (DE)**
• **TOLLKÜHN, Andreas**
  **85049 Ingolstadt (DE)**

(74) Vertreter: **Bauer, Dominik Michael**
**Audi AG**
**Patentabteilung**
**85045 Ingolstadt (DE)**

(56) Entgegenhaltungen:
**WO-A1-2013/027404     DE-A1- 3 310 111**
**FR-A1- 2 684 213**

EP 3 047 234 B1

**Beschreibung**

Die Erfindung betrifft ein Verfahren zur Ermittlung einer aktuellen Position eines Kraftfahrzeugs in einem geodätischen Koordinatensystem aus einer Zeitreihe von ersten, insbesondere durch einen einem globalen Navigationssatellitensystem zugeordneten Positionssensor aufgenommenen, geodätischen Positionsdaten und durch wenigstens einen Eigenbewegungssensor aufgenommenen Eigenbewegungsdaten. Daneben betrifft die Erfindung ein Kraftfahrzeug.

Eine möglichst genaue Positionsinformation ist in modernen Kraftfahrzeugen für eine Vielzahl von Fahrzeugsystemen nützlich, insbesondere für Navigationssysteme, in denen teilweise hochgenaue Informationen, beispielsweise über Hindernisse, enthalten sein können. Daher ist man bestrebt, die Position des Kraftfahrzeugs möglichst genau zu bestimmen. Hierzu wurde vorgeschlagen, Positionssensoren zu verwenden, die die Lokalisierung des Kraftfahrzeugs aufgrund eines globalen Navigationssatellitensystems (GNSS), beispielsweise dem GPS (Global Positioning System), erlauben. Andere Möglichkeiten zur Ortsbestimmung in einem geodätischen Koordinatensystem sehen vor, Straßenschilder, deren exakte Position bekannt ist, zu detektieren und/oder das Kraftfahrzeug durch einen externen Sensor, beispielsweise eine Kamera, aufzunehmen, die, beispielsweise über Car-2-X-Kommunikation, die entsprechenden Positionsdaten im geodätischen Koordinatensystem zu übermitteln, nachdem die exakte Position zumindest des externen Sensors ja bekannt ist. Derartige Positionsbestimmungssysteme weisen jedoch häufig nicht die benötigte Genauigkeit auf und zeigen insbesondere auch Ungenauigkeiten, die von einer Gaußschen Fehlerverteilung abweichen.

Es wurde mithin vorgeschlagen, weitere im Kraftfahrzeug aufgenommene Sensordaten zu verwenden, um hieraus eine genauere aktuelle Position eines Kraftfahrzeugs bestimmen zu können. Besonders bieten sich in diesem Zusammenhang Eigenbewegungsdaten wenigstens eines Eigenbewegungssensors an, die es erlauben, beispielsweise über ein vorbestimmtes Zeitfenster sämtliche Bewegungen des Kraftfahrzeugs nachzuvollziehen. Häufig enthalten Eigenbewegungsdaten ein Positionsinkrement, mithin eine Richtung und eine Länge eines Vektors zwischen zwei Erfassungen von Sensordaten mit dem Eigenbewegungssensor. Eigenbewegungssensoren können beispielsweise Raddrehzahlsensoren sein, die über einen angenommenen oder ebenso bekannten Radumfang eine zurückgelegte Strecke messbar machen, oder eine Inertialsensorik umfassen.

Ansätze, GNSS mit einer Eigenbewegungsschätzung zu koppeln, um eine verbesserte Lokalisierung des Kraftfahrzeugs, speziell im urbanen Gebiet, zu erlauben, sind im Stand der Technik bereits vorgeschlagen worden. Dabei werden Zustandsschätzer, beispielsweise Kalman-Filter, und Derivate von Zustandsschätzern verwendet, wofür beispielsweise auf die Standardwerke von J. Wendel, "Integrierte Navigationssysteme: Sensordaten, GPS und Inertiale Navigation", Oldenbourg Wissenschafts Verlag, 2007, und J. Farrell, "The Global Positioning System & Inertial Navigation", McGraw-Hill Companies, Inc., 1998, verwiesen sei. Die Verwendung derartiger Zustandsschätzer hat jedoch eine Vielzahl von Nachteilen. Zum einen wird die innere Stimmigkeit der Eigenbewegungsschätzung, mithin der Ego-Trajektorie, kaum berücksichtigt, nachdem die Historie lediglich in die Zustands-Kovarianzmatrix eingeht. Die bekannten Verfahren weisen zudem eine starke Abhängigkeit von der Qualität der Konfidenzen ab, die von Positionssensoren für GNSS meist mitgeliefert werden. Die Verwendung von Zustandsschätzern setzt zudem voraus, dass gaußverteilte Fehler vorliegen, was bei GNSS nicht immer zutrifft. Bei der Verarbeitung der Positionsdaten, insbesondere von GPS-Daten, ist eine aufwendige Kompensation der Latenz nötig. Eine Ausreißerdetektion findet allenfalls statisch statt.

Dokument FR 2 684 213 A1 betrifft ein Verfahren zur Unterstützung der Navigation eines Landfahrzeugs, wobei erste Informationen oder Navigationsinformationen, die eine punktweise Berechnung des Kurses und der Navigationsposition des Fahrzeuges in Bezug auf eine Startposition ermöglichen, mit zweiten Informationen oder durch Funkwellen empfangenen Ortsinformationen kombiniert werden, die eine genaue direkte Positionsbestimmung des Fahrzeugs an bestimmten dieser Punkte ermöglichen im Hinblick auf eine Anpassung in Echtzeit des Kurses und der Position des Fahrzeugs an die Gesamtheit der Navigationspunkte.

Der Erfindung liegt daher die Aufgabe zugrunde, ein Verfahren zur verbesserten, insbesondere genaueren Ermittlung einer aktuellen Position eines Kraftfahrzeugs anzugeben, welches insbesondere die speziellen Eigenschaften der Datenquellen berücksichtigt.

Zur Lösung dieser Aufgabe ist ein Verfahren nach Anspruch 1 vorgesehen, bei dem die Position durch Anwendung einer Transformation in das geodätische Koordinatensystem auf einen aus den aktuellsten, aus den Eigenbewegungsdaten hergeleiteten Verschiebungsvektor des Kraftfahrzeugs ab einem Referenzzeitpunkt, auf den sich die Transformation bezieht, ermittelt wird, wobei die Transformation im Rahmen einer Regressionsanalyse als optimale Abbildung eines über einen definierte Zeitraum ermittelten Verlaufs von Verschiebungsvektoren auf einen für denselben Zeitraum ermittelten Verlauf der Positionsdaten bestimmt wird.

Es wird mithin vorgeschlagen, eine Transformation auf einen Verschiebungsvektor anzuwenden, der den aufintegrierten Eigenbewegungsdaten ab einem Referenzzeitpunkt entspricht, mithin angibt, wie weit in welche Richtung sich das Kraftfahrzeug effektiv seit dem Referenzzeitpunkt (und damit ausgehend von einer Referenzposition) bewegt hat. Beispielsweise kann eine Aufsummierung gemessener Positionsinkremente ab dem Referenzzeitpunkt erfolgen, welcher im Übrigen auch nicht fest sein muss, nachdem zur Veränderung der Transformation lediglich als Translation der Verschiebungsvektor vom alten Referenzzeitpunkt zum neuen Referenzzeitpunkt (bzw. den zugeordneten Positionen) hinzugefügt werden muss. Es ist jedoch ohnehin nicht nötig, alle Eigenbewegungsdaten immer vorzuhalten, nachdem der zum letzten Zeitschritt genutzte Verschiebungsvektor lediglich um ein neu hinzukommendes Positionsinkrement ergänzt werden muss.

Die Transformation wird im Rahmen einer Regressionsanalyse bestimmt. Das hier vorgestellte Verfahren löst das Problem der Sensordatenfusion mithin dadurch, dass mit Mitteln der Regressionsanalyse die Eigenbewegungstrajektorie in die Positionsdaten, insbesondere die GPS-Messpunkte, eingepasst wird. Aus dieser Einpassung kann die Vorschrift für die Transformation optimal geschätzt werden. Dabei wird ausgenutzt, dass die Eigenbewegungstrajektorie, wie sie durch die Eigenbewegungsdaten beschrieben wird, kurzzeitgenau ist, das bedeutet, der Fehler wächst langsam über die Zeit. Die im geodätischen Koordinatensystem vorliegenden Positionsdaten, insbesondere GPS-Positionsdaten, werden als langzeitstabil angenommen, das bedeutet, es wird angenommen, dass der Erwartungswert der Positionsdaten dem wahren Wert entspricht.

Die so beschriebene Sensordatenfusion mittels Regression hat zahlreiche Vorteile gegenüber den bekannten Verfahren. So ist eine größere Robustheit gegenüber nicht gaußverteilten Fehlern gegeben, nachdem diese nicht als Voraussetzung eingehen. Auch die Robustheit gegenüber ungenauen Konfidenzen steigt. Die Vorgehensweise erlaubt zudem eine noch näher zu diskutierende adaptive Ausreißerdetektion, wobei mit jeder Neuberechnung der Transformation, was vorzugsweise zyklisch erfolgt, eine neue Auswahl möglich ist. Inhärent wird zudem die innere Stimmigkeit der Ego-Trajektorie erhalten.

Die Parameter der Transformation können dabei auch als Parameter, die ein aktuelles Positionsmodell beschreiben, aufgefasst werden. Mithin werden die Positionsdaten und die Eigenbewegungsdaten, die die Trajektorie des Kraftfahrzeugs beschreiben, regelmäßig zusammengeführt, um aus einer Modell-Schätzung Parameter einer Transformation zu erhalten, die dann immer, wenn neue Eigenbewegungsdaten vorliegen, auf den aktuellen Verschiebungsvektor angewandt werden können, so dass eine verbesserte, genauere geodätische Position erhalten werden kann.

Als Positionssensor zur Ermittlung der Positionsdaten kann ein GPS-Sensor verwendet werden, wobei selbstverständlich auch andere Positionssensoren für andere globale Navigationssatellitensysteme (GNSS) eingesetzt werden können. Die Positionsdaten können jedoch auch aus anderen Quellen erhalten werden, beispielsweise durch Detektion von Straßenschildern oder sonstigen Objekten, deren geodätische Position bekannt ist, oder aber durch externe Sensoren, die ihre Beobachtungen beispielsweise über die Car-2-X-Kommunikation an das Kraftfahrzeug liefern können. Hierüber bestimmte Positionsdaten werden durch das erfindungsgemäße Verfahren verbessert, indem die Eigenbewegungskopplung über die Regression durchgeführt wird. Dabei bestimmten die Positionsdaten, wie beschrieben wurde, eine Transformation, durch die Verschiebungsvektoren in das geodätische Koordinatensystem übertragen werden können.

Als Eigenbewegungssensor zur Ermittlung der Eigenbewegungsdaten kann unter anderem ein Drehzahlsensor wenigstens eines Rades verwendet werden, wobei die Bewegungsrichtung durch verschiedene andere Sensoren und/oder Fahrzeugsysteme zusätzlich ermittelt werden kann. Verfahren zur Aufnahme von Eigenbewegungsdaten sind im Stand der Technik grundsätzlich bekannt und können auch im Rahmen der vorliegenden Erfindung verwendet werden.

Es wird wenigstens eine Drehung und wenigstens eine Translation umfassende Transformation verwendet. Dabei ist es bevorzugt, wenn der Verlauf der Eigenbewegungsdaten möglichst starr gehalten wird, das bedeutet, es wird eine einzige Rotation desselben Winkels als Transformationsparameter auf alle Verschiebungsvektoren des Verlaufs angewandt und es wird dieselbe Translation für alle Verschiebungsvektoren des Verlaufs verwendet, wobei die Einträge des Translationsvektors dann weitere Transformationsparamater darstellen. Teil der Transformation sind also eine globale Translation und eine globale Rotation.

Die Transformation umfasst zusätzlich noch eine Skalierung des Verschiebungsvektors. Ein derartiger Skalierungsfaktor, welcher auch unmittelbar auf Positionsinkremente angewendet werden kann, deckt Ungenauigkeiten in der Bestimmung der Eigenbewegungsdaten ab, was die Streckenlägen angeht, beispielsweise eine Fehlannahme eines Reifenumfangs und dergleichen. Ferner wird die Tatsache, dass die Oberfläche der Erde nicht flach ist, auf diese Weise abgedeckt, nachdem meist ein zweidimensionales geodätisches Koordinatensystem eingesetzt wird.

Im Allgemeinen kann vorgesehen sein, dass die Transformation in einem die Abweichung der Verläufe minimierenden Optimierungsverfahren bestimmt wird. Es ist zweckmäßig, nachdem Eigenbewegungsdaten häufiger aufgenommen werden können als Positionsdaten, einen Verschiebungsvektor für jeden Zeitpunkt zu bestimmen, zu dem auch ein Positionsdatum in den Positionsdaten vorliegt, und nur diese durch die Zeitpunkte der Positionsdatenaufnahme bestimmten Stützstellen zu betrachten. Dabei kann eine Interpolation von Eigenbewegungsdaten in Frage kommen. Eine optimale Transformation kann nun aufgefunden werden, indem für eine aktuelle betrachtete Transformation ein transformierter Verschiebungsvektor für jeden dieser Zeitpunkte bestimmt wird. Dann ergibt sich die Abweichung der Verläufe durch eine Betrachtung der Differenz zwischen dem Positionsdatum und dem transformierten Verschiebungsvektor zum selben Zeitpunkt. Eine zu minimierende Zielfunktion kann durch eine Kombination dieser Einzelfehler für die verschiedenen Zeitpunkte ermittelt werden, wobei eine lineare oder eine nichtlineare Optimierung erfolgen kann.

Zweckmäßig ist es, wenn als Startposition für das Optimierungsverfahren der Verlauf der Verschiebungsvektoren so gelegt wird, dass der erste Verschiebungsvektor dem ersten Positionsdatum und/oder der letzte Verschiebungsvektor dem letzten Positionsdatum entspricht. Somit ist bereits eine gute Ausgangsposition zur Findung des Minimums, also der besten Übereinstimmung der Verläufe, gegeben. Werden Skalierungsfaktoren als Parameter der Transformation verwendet, ist es im Übrigen auch möglich, den Verlauf der Verschiebungsvektoren so zu legen, dass der erste Verschiebungsvektor dem ersten Positionsdatum und gleichzeitig der letzte Verschiebungsvektor dem letzten Positionsdatum entspricht.

Vorzugsweise werden im Optimierungsverfahren Abweichungen an verschiedenen Zeitpunkten des Verlaufs unterschiedlich gewichtet berücksichtigt. Das bedeutet, beispielsweise in die oben beschriebene Bildung einer Zielfunktion können auch Gewichtungsfaktoren einfließen, die beispielsweise die Abweichung an jedem Zeitpunkt unterschiedlich gewichtet eingehen lassen können. Hierzu kann vorgesehen sein, dass zeitlich früher vermessene Punkte weniger stark gewichtet werden als zeitlich später vermessene Punkte. Dies liegt darin begründet, dass der Messfehler häufig von der Eigengeschwindigkeit des Kraftfahrzeugs und der Gierrate abhängt, so dass es zweckmäßiger ist, neuere Punkte stärker als ältere zu gewichten. Es kann jedoch, gegebenenfalls zusätzlich, auch vorgesehen sein, dass die Gewichtung mit einem von einem jedem Positionsdatum zugeordneten Konfidenzwert abhängigen Gewichtungsfaktor erfolgt. GNSS-Positionssensoren liefern meist zusätzlich zu den Positionsdaten auch einen Konfidenzwert, der die abgeschätzte Genauigkeit der Positionsbestimmung wiedergibt. Dieser kann auch als Gewichtung für den Fehlervektor eingesetzt werden. Ferner ist es denkbar, die Gewichtungsfaktoren in Abhängigkeit von der Gierrate oder einem anderen Fahrdynamikparameter des Kraftfahrzeugs unmittelbar abhängig zu machen, beispielsweise auch von der Geschwindigkeit. So kann der Zustand des Kraftfahrzeugs bei Aufnahme der Positionsdaten berücksichtigt werden.

Eine besonders vorteilhafte Ausgestaltung der vorliegenden Erfindung sieht vor, dass vor und/oder während der Bestimmung der Transformation unter Verwendung eines RANSAC-Algorithmus Ausreißer in dem Verlauf der Positionsdaten identifiziert und bei der Bestimmung der Transformation nicht berücksichtigt werden. Ausreißer bei GNSS-Positionsdaten können beispielsweise durch Reflektionen von von Satelliten ausgestrahlten Signalen an Objekten in der Umgebung des Kraftfahrzeugs und dergleichen ausgelöst werden, meist also in einer urbanen Umgebung. Dann kann es zu Positionsdaten kommen, die deutlich von den anderen Positionsdaten, die im Verlauf enthalten sind, abweichen. Solche Ausreißer können beispielsweise mit dem RANSAC-Algorithmus, der im Stand der Technik bekannt ist, aufgefunden werden. Eine Beschreibung des RANSAC-Algorithmus findet sich beispielsweise in dem grundlegenden Artikel von Martin A. Fischler und Robert C. Bolles, "Random sample consensus: a paradigm for model fitting with applications to image analysis and automated cartography", Commun. ACM, 24 (6): 381 - 395, 1981.

Eine Weiterbildung des Verfahrens sieht vor, dass die Transformation beschreibende Parameter über mehrere aufeinanderfolgende Ermittlungen der Transformation geglättet werden, insbesondere durch Bildung eines gleitenden Mittelwerts. Es ist mithin eine Glättung des Verlaufs der Transformationsparameter denkbar, die beispielsweise durch eine Zustandsschätzung erreicht werden kann. Dabei wird davon ausgegangen, dass die Transformationsvorschrift als stationär oder zumindest langsam veränderlich angesehen werden kann, so dass beispielsweise plötzlich auftretende Sprünge in Transformationsparametern, die ungewollt sind, unterdrückt werden sollten. In diesem Fall werden also die Ergebnisse der Regression für mehrere aufeinanderfolgende Regressionsanalysen vorgehalten und zur Glättung weiter verwendet, beispielsweise durch Bildung eines gleitenden Mittelwerts.

Wie bereits angedeutet wurde, kann die Transformation zyklisch wiederholt neubestimmt werden, insbesondere mit der Frequenz, mit der neue Positionsdaten vorliegen, oder ganzzahligen Bruchteilen davon. So kann beispielsweise bei einem Positionssensor, der mit einer Frequenz von 10 Hz Positionsdaten liefert, alle 0,1s eine neue Bestimmung der Transformation erfolgen. Es ist jedoch nicht zwangsläufig notwendig, mit jedem Erhalt eines neu gemessenen Positionsdatums, beispielsweise durch den Positionssensor, eine neue Regressionsanalyse durchzuführen, sondern es hat sich gezeigt, dass es ausreichend ist, die Ermittlung der Transformation in größeren Zeitabständen zu wiederholen, im oben genannten Beispiel also insbesondere mit einer Frequenz von 5 Hz, 1 Hz, 0,5 Hz oder dergleichen ganzzahligen Bruchteilen. So ist eine regelmäßige Neubestimmung gegeben, ohne dass durch eine zu häufige neue Bestimmung eine zu starke Belastung beispielsweise eines ausführenden Steuergeräts auftritt.

Der definierte Zeitraum kann mit einer Länge von 20 bis 40 Sekunden, bevorzugt 30 Sekunden, oder derart gewählt werden, dass in ihm 100 bis 500 Zeitpunkte, zu denen Positionsdaten aufgenommen wurden, liegen. Bevorzugt enthält der definierte Zeitraum dabei eine vorbestimmte Zahl von Zeitpunkten, zu denen Positionsdaten aufgenommen wurden. Ist die Länge des vorbestimmten Zeitraums als 30 Sekunden angedacht, entspricht dies einer vorbestimmten Zahl von 150 Zeitpunkten bei einer Frequenz von 5 Hz, mit der die Positionsdaten geliefert werden, und einer vorbestimmten Zahl von 300 bei einer Frequenz von 10 Hz, mit der Positionsdaten geliefert werden.

Besonders bevorzugt ist es, wenn mit der Bestimmung der Transformation auch wenigstens ein Parameter eines Sensormodells des Eigenbewegungssensors, insbesondere ein den Messfehler beschreibender Parameter, ermittelt wird. Zusätzlich können also auch noch Parameter eines Sensormodells, insbesondere eines Fehlermodells für den Sensor, mitoptimiert werden. Beispielsweise kann bekannt sein, dass für den Messfehler ein linearer Zusammenhang zur Geschwindigkeit vorliegt, was den Eigenbewegungssensor angeht. Mithin kann dieser Messfehler aus einem Sensormodell (Fehlermodell) abschätzbar sein, so dass die Vorverarbeitung der Eigenbewegungsdaten verbessert werden kann, wenn auch auf die Beschreibung des Fehlers durch den Parameter im Sensormodell hin optimiert wird.

Neben dem Verfahren betrifft die Erfindung auch ein Kraftfahrzeug, umfassend ein zur Durchführung des erfindungsgemäßen Verfahrens ausgebildetes Steuergerät. Das Kraftfahrzeug weist zudem eine erste Datenquelle für Positionsdaten, insbesondere einen Positionssensor eines GNSS, und eine zweite Datenquelle, insbesondere umfassend wenigstens einen Eigenbewegungssensor, für die Eigenbewegungsdaten auf. Im Rahmen einer Sensorfusion werden die Positionsdaten und die Eigenbewegungsdaten genutzt, um eine verbesserte Positionsbestimmung zu ermöglichen. Sämtliche Ausführungen zum erfindungsgemäßen Verfahren lassen sich analog auf das erfindungsgemäße Kraftfahrzeug übertragen, mit welchem mithin dieselben Vorteile erhalten werden können.

Weitere Vorteile, Merkmale und Einzelheiten der vorliegenden Erfindung ergeben sich aus den im Folgenden beschriebenen Ausführungsbeispielen sowie anhand der Zeichnung. Dabei zeigen:

Fig. 1 eine Skizze zur Erläuterung des erfindungsgemäßen Verfahrens, und

Fig. 2 ein erfindungsgemäßes Kraftfahrzeug.

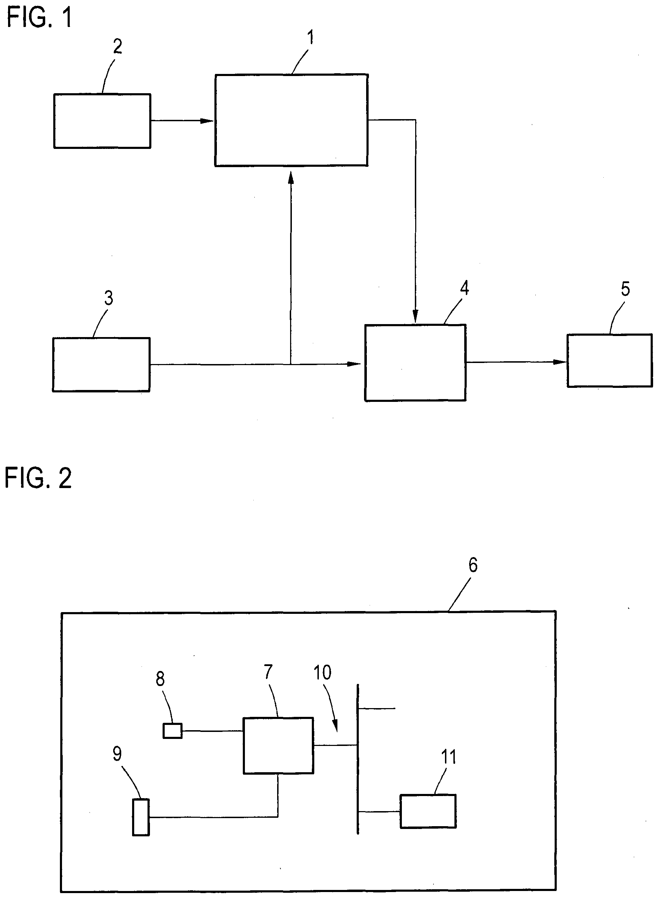

Fig. 1 zeigt eine Skizze zur Durchführung des erfindungsgemäßen Verfahrens. Dieses findet letztlich auf zwei unterschiedlichen Zeitskalen statt, nachdem eine Neuberechnung von Transformationsparametern in einem Schritt 1 aus Positionsdaten 2 und Eigenbewegungsdaten 3 nur alle 5 Sekunden erfolgt, während die Anwendung der Transformation auf einen aktuellen, deutlich häufiger vorliegenden Verschiebungsvektor ab einem Referenzzeitpunkt im Schritt 4 deutlich häufiger erfolgt, beispielsweise mit einer Frequenz von größer als 10 Hz. Kurz zusammengefasst ermittelt das Verfahren in Schritt 1 mithin eine Transformation, die sich auf einen Referenzzeitpunkt bezieht und einen Verschiebungsvektor, der die Positionsveränderung seit dem Referenzzeitpunkt beschreibt, in das globale geodätische Koordinatensystem transformiert, was dann in Schritt 4 passiert, so dass eine hochgenaue, aktuelle Position 5 erhalten werden kann. Dies sei im Folgenden nun näher erläutert.

In Schritt 1 wird ein vorbestimmter, definierter Zeitraum betrachtet, der vorliegend N = 150 Zeitpunkte enthält, zu denen Positionsdaten aufgenommen wurden. Nachdem der Positionssensor, in diesem Ausführungsbeispiel ein GPS-Sensor, mit einer Frequenz von 5 Hz Positionsdaten liefert, hat der vorbestimmte Zeitraum mithin eine Länge von 30 Sekunden. Der Vektor eines Positionsdatums im geodätischen Koordinatensystem zum Zeitpunkt i soll im Folgenden mit $\mathbf{p}_i$ bezeichnet werden. Zu jedem der Zeitpunkte i lässt sich aus den Eigenbewegungsdaten 3 durch Aufintegration der Eigenbewegung ein Verschiebungsvektor $\mathbf{v}_i$ ermitteln, zum Referenzzeitpunkt der Nullvektor. Somit liegen dann zu jedem Zeitpunkt N Paare ($\mathbf{p}_i$, $\mathbf{v}_i$) vor. Im Rahmen einer Regressionsanalyse soll nun eine auf die Verschiebungsvektoren $\mathbf{v}_i$ anzuwendende Transformation bestimmt werden, so dass der durch die transformierten Verschiebungsvektoren $\tilde{\mathbf{v}}_i$ gebildete Verlauf möglichst genau dem durch die Positionsdaten $\mathbf{p}_i$ bestimmten Verlauf entspricht.

Zunächst jedoch werden die Positionsdaten $\mathbf{p}_i$ durch einen RANSAC-Algorithmus auf Ausreißer untersucht; diese Ausreißer werden der weiteren Betrachtung entzogen.

Im vorliegenden Ausführungsbeispiel wird von folgender Transformation ausgegangen, um transformierte Verschiebungsvektoren $\tilde{\mathbf{v}}_i$ zu bestimmen:

$$\tilde{\mathbf{v}}_i = a\,R\,(\varphi)\,\mathbf{v}_i + \mathbf{o}$$

$R\,(\varphi)$ betrifft dabei eine Rotation um einen Winkel $\varphi$, die auf alle $\mathbf{v}_i$ anzuwenden ist. $\mathbf{o}$ beschreibt eine feste Translation für alle $\mathbf{v}_i$. Der Parameter a ist ein Skalierungsfaktor, der Abweichungen der Erde von einer flachen Ebene und auch Abweichungen bei der Bestimmung der Eigenbewegungsdaten, beispielsweise durch einen falsch angenommenen Reifenumfang bei einem Drehzahlsensor eines Rades, ausgleichen kann. Mithin liegen vorliegend vier Parameter der Transformation vor, nämlich der Drehwinkel $\varphi$, der Skalierungsfaktor a und die zwei Koordinatenwerte der Translation $\mathbf{o}$.

Für jeden Punkt i im Verlauf (also letztlich für jeden Zeitpunkt) lässt sich eine Abweichung $\mathbf{e}_i$ bestimmten.

$$\mathbf{e}_i = \mathbf{p}_i - \tilde{\mathbf{v}}_i$$

Hieraus lässt sich eine zu minimierende Zielfunktion E definieren.

$$E = \Sigma\,w_i * |\mathbf{e}_i|$$

Bevor nun in einem Optimierungsverfahren die Zielfunktion E, die die Abweichung des transformierten Verlauf $\tilde{\mathbf{v}}_i$ von dem durch die Positionsdaten definierten Verlauf $\mathbf{p}_i$ beschreibt, minimiert wird, wird ein geeigneter Startpunkt gewählt, hier derart, dass der erste Verschiebungsvektor $\mathbf{v}_1$ dem ersten Positionsdatum $\mathbf{p}_i$ und der letzte Verschiebungsvektor $\mathbf{v}_N$ dem letzten Positionsdatum $\mathbf{p}_N$ entspricht, was aufgrund der Verwendung des Skalierungsfaktors a zweifelsohne möglich ist.

Danach wird ein Optimierungsverfahren durchgeführt, welches die Zielfunktion E minimiert und somit eine optimale Schätzung für die Parameter der Transformation, also für a, φ, und **o** bestimmt. Wie der oben angegebenen Formel für die Zielfunktion E zu entnehmen ist, kann diese Gewichtungsfaktoren $w_i$ enthalten. Dabei erfolgt eine Gewichtung vorliegend derart, dass ältere Werte, also die früheren Punkte des Verlaufs, weniger stark als neuere gewichtet werden; zusätzlich geht jedoch auch noch ein zu jedem Positionsdatum vorliegender, vom Positionssensor mitgelieferter Konfidenzwert in die Gewichtung ein.

Parallel zur Ermittlung der Parameter der Transformation wird im Übrigen auch wenigstens ein einen Messfehler beschreibender Parameter eines Sensormodells für den wenigstens einen Eigenbewegungssensor optimiert, um zukünftig eine verbesserte Vorverarbeitung der Eigenbewegungsdaten 3 zu ermöglichen.

Die Parameter der Transformation werden zyklisch neu bestimmt, vorliegend alle 5 Sekunden, wobei zusätzlich eine Glättung sowohl der Parameter der Transformation als auch des Parameters des Sensormodells stattfindet. Dies geschieht vorliegend durch Bildung eines geeigneten Mittelwerts über mehrere Regressionen, also mehrere zeitlich aufeinanderfolgende Ausführungen des Schrittes 1. Dies ist jedoch optional bzw. kann auch nur für einige der bestimmten Parameter durchgeführt werden.

Die aktuellen Transformationsparameter werden in Schritt 4 eingesetzt, um jeweils die aktuellen Eigenbewegungsdaten 3 zu verwenden, um die verbesserte aktuelle Position 5 zu ermitteln.

Fig. 2 zeigt eine Prinzipskizze eines erfindungsgemäßen Kraftfahrzeugs 6. Dieses umfasst ein Steuergerät 7, in dem das erfindungsgemäße Verfahren ausgeführt werden kann. Hierzu nimmt das Steuergerät 7 Positionsdaten 2 eines Positionssensors 8, hier eines GPS-Sensors, genauso entgegen wie Eigenbewegungsdaten 3 wenigstens eines Eigenbewegungssensors 9. Dabei entstehen Eigenbewegungsdaten meist durch Kombination von Daten mehrerer Sensoren, beispielsweise zur Ermittlung der zurückgelegten Strecke durch einen Drehzahlsensor eines Rades, bei dem ein bestimmter Reifenumfang angenommen wird, und zur Richtungsbestimmung aus Daten eines Kompasses und/oder einer Inertialsensorik.

Die ermittelte aktuelle Position 5 kann an ein Bussystem 10 des Kraftfahrzeugs 6, beispielsweise einen CAN-Bus, ausgegeben werden, wo sie beispielsweise von einem Navigationssystem 11 oder anderen, hier nicht näher gezeigten Fahrzeugsystemen weiterverwendet werden kann.

**Patentansprüche**

1. Verfahren zur Ermittlung einer aktuellen Position (5) eines Kraftfahrzeugs (6) in einem geodätischen Koordinatensystem aus einer Zeitreihe von ersten, insbesondere durch einen einem globalen Navigationssatellitensystem zugeordneten Positionssensor (8) aufgenommenen, geodätischen Positionsdaten (2) und durch wenigstens einen Eigenbewegungssensor (9) aufgenommenen Eigenbewegungsdaten (3), wobei die Position durch Anwendung einer wenigstens eine Drehung und wenigstens eine Translation umfassenden Transformation in das geodätische Koordinatensystem auf einen aus den aktuellsten, aus den Eigenbewegungsdaten (3) hergeleiteten Verschiebungsvektor des Kraftfahrzeugs (6) ab einem Referenzzeitpunkt, auf den sich die Transformation bezieht, ermittelt wird, wobei die Transformation im Rahmen einer Regressionsanalyse als optimale Abbildung eines über einen definierten Zeitraum ermittelten Verlaufs von Verschiebungsvektoren auf einen für denselben Zeitraum ermittelten Verlauf der Positionsdaten (2) bestimmt wird,
**dadurch gekennzeichnet,**
**dass** die Transformation zusätzlich noch eine Skalierung des Verschiebungsvektors umfasst.

2. Verfahren nach Anspruch 1,
**dadurch gekennzeichnet,**
**dass** als Positionssensor (8) zur Ermittlung der Positionsdaten (2) ein GPS-Sensor verwendet wird und/oder als Eigenbewegungssensor (9) zur Ermittlung der Eigenbewegungsdaten (3) ein Drehzahlsensor wenigstens eines Rades verwendet wird.

3. Verfahren nach einem der vorangehenden Ansprüche,
**dadurch gekennzeichnet,**
**dass** die Transformation in einem die Abweichung der Verläufe minimierenden Optimierungsverfahren bestimmt wird.

4. Verfahren nach Anspruch 3,
**dadurch gekennzeichnet,**
**dass** als Startposition für das Optimierungsverfahren der Verlauf der Verschiebungsvektoren so gelegt wird, dass der erste Verschiebungsvektor dem ersten Positionsdatum und/oder der letzte Verschiebungsvektor dem letzten Positionsdatum entspricht.

5. Verfahren nach Anspruch 3 oder 4,
**dadurch gekennzeichnet,**
**dass** Abweichungen an verschiedenen Punkten des Verlaufs unterschiedlich gewichtet berücksichtigt werden.

6. Verfahren nach Anspruch 5,
**dadurch gekennzeichnet,**
**dass** zeitlich früher vermessene Punkte weniger stark gewichtet werden als zeitlich später vermessene Punkte und/oder die Gewichtung mit einem von einem jedem Positionsdatum zugeordneten Konfidenzwert abhängigen Gewichtungsfaktor erfolgt.

7. Verfahren nach einem der vorangehenden Ansprüche,
**dadurch gekennzeichnet,**
**dass** vor und/oder während der Bestimmung der Transformation unter Verwendung eines RANSAC-Algorithmus Ausreißer in dem Verlauf der Positionsdaten (2) identifiziert und bei der Bestimmung der Transformation nicht berücksichtigt werden.

8. Verfahren nach einem der vorangehenden Ansprüche,
**dadurch gekennzeichnet,**
**dass** die Transformation beschreibende Parameter über mehrere aufeinanderfolgende Ermittlungen der Transformation geglättet werden, insbesondere durch Bildung eines gleitenden Mittelwerts.

9. Verfahren nach einem der vorangehenden Ansprüche,
**dadurch gekennzeichnet,**
**dass** die Transformation zyklisch wiederholt neu bestimmt wird.

10. Verfahren nach einem der vorangehenden Ansprüche,
**dadurch gekennzeichnet,**
**dass** der definierte Zeitraum mit einer Länge von 20 bis 40 Sekunden, bevorzugt 30 Sekunden, oder so gewählt wird, dass in ihm 100 bis 500 Zeitpunkte, zu denen Positionsdaten (2) aufgenommen wurden, liegen.

11. Verfahren nach einem der vorangehenden Ansprüche,
**dadurch gekennzeichnet,**
**dass** mit der Bestimmung der Transformation auch wenigstens ein Parameter eines Sensormodells des Eigenbewegungssensors (9), insbesondere ein den Messfehler beschreibender Parameter, ermittelt wird.

12. Kraftfahrzeug (6), umfassend ein zur Durchführung eines Verfahrens nach einem der vorangehenden Ansprüche ausgebildetes Steuergerät (7).

**Claims**

1. Method for establishing a current position (5) of a motor vehicle (6) in a geodetic coordinate system from a time series of first geodetic position data (2), which are in particular recorded by a position sensor (8), which is associated with a global navigation satellite system, and proper motion data (3), which are recorded by at least one proper motion sensor (9), wherein the position is established by applying a transformation, which comprises at least one rotation and at least one translation, in the geodetic coordinate system to a displacement vector of the motor vehicle (6), which is derived from the most current data from the proper motion data (3), from a reference time point, to which the transformation relates, wherein the transformation is determined within the context of a regression analysis as an optimal mapping of a path of displacement vectors, which is established over a defined period of time, on a path of the position data (2), which is established for the same period of time,
**characterised in that**
the transformation additionally also comprises a scaling of the displacement vector.

2. Method according to claim 1
**characterised in that**
a GPS sensor is used as a position sensor (8) for establishing the position data (2) and/or a speed sensor of at least one wheel is used as a proper motion sensor (9) for establishing the proper motion data (3).

3. Method according to either of the preceding claims,
**characterised in that**
the transformation is determined in an optimisation method, which minimises the deviation of the paths.

4. Method according to claim 3,
**characterised in that**,
as a starting position for the optimisation method, the path of the displacement vectors is placed in such a manner that the first displacement vector corresponds to the first piece of position data and/or the last displacement vector corresponds to the last piece of position data.

5. Method according to claim 3 or 4,
**characterised in that**
deviations at various locations of the path are taken into account with different weightings.

6. Method according to claim 5,
**characterised in that**
locations, which have been measured at earlier times, are given less weighting than locations, which are measured at later times, and/or the weighting is carried out using a weighting factor, which is dependent on a confidence value associated with each piece of position data.

7. Method according to any one of the preceding claims,
   **characterised in that**,
   before and/or during the determination of the transformation, outliers are identified in the path of the position data (2) by using a RANSAC algorithm and are not taken into account during the determination of the transformation.

8. Method according to any one of the preceding claims,
   **characterised in that**
   parameters, which describe the transformation, are smoothed over a plurality of sequential occurrences of establishment of the transformation, in particular by forming a moving mean value.

9. Method according to any one of the preceding claims,
   **characterised in that**
   the transformation is newly determined in a cyclically repeated manner.

10. Method according to any one of the preceding claims,
    **characterised in that**
    the defined period of time is selected so as to have a length of from 20 to 40 seconds, preferably 30 seconds, or so that there are therein from 100 to 500 periods of time, at which position data (2) were recorded.

11. Method according to any one of the preceding claims,
    **characterised in that**
    with the determination of the transformation at least one parameter of a sensor model of the proper motion sensor (9), in particular a parameter, which describes the measurement error, is also established.

12. Motor vehicle (6) comprising a control device (7), which is constructed to carry out a method according to any one of the preceding claims.

**Revendications**

1. Procédé de détermination d'une position actuelle (5) d'un véhicule automobile (6) dans un système de coordonnées géodésiques à partir d'une série temporelle de premières données de position (2) géodésiques, détectées en particulier par un capteur de position (8) associé à un système de navigation par satellites, et de données de mouvement propre (3), détectées par au moins un capteur de mouvement propre (9), dans lequel la position est déterminée en appliquant une transformation, comprenant au moins une rotation et au moins une translation, dans le système de coordonnées géodésiques à un vecteur de translation, déduit des données de mouvement propre (3) les plus actuelles, du véhicule automobile (6) à partir d'un instant de référence auquel la transformation se rapporte, la transformation étant déterminée dans le cadre d'une analyse régressive en tant que reproduction optimale d'une courbe, déterminée sur un intervalle de temps défini, de vecteurs de translation sur une courbe, déterminée pour le même intervalle de temps, des données de position (2),
   **caractérisé en ce que** la transformation comprend en plus une mise à l'échelle du vecteur de translation.

2. Procédé selon la revendication 1, **caractérisé en ce que**, comme capteur de position (8) destiné à la détermination des données de position (2), on utilise un capteur GPS et/ou, comme capteur de mouvement propre (9) destiné à la détermination des données de mouvement propre (3), on utilise un capteur de vitesse de rotation d'au moins une roue.

3. Procédé selon l'une des revendications précédentes, **caractérisé en ce que** la transformation est déterminée dans un procédé d'optimisation minimisant l'écart des courbes.

4. Procédé selon la revendication 3, **caractérisé en ce que**, comme position initiale destinée au procédé d'optimisation, on place la courbe des vecteurs de translation de telle sorte que le premier vecteur de translation correspond à la première donnée de position et/ou le dernier vecteur de translation correspond à la dernière donnée de position.

5. Procédé selon la revendication 3 ou 4, **caractérisé en ce que** des écarts en des points différents de la courbe sont pris en compte avec une pondération différente.

6. Procédé selon la revendication 5, **caractérisé en ce que** des points mesurés plus tôt dans le temps sont moins fortement pondérés que des points mesurés plus tard dans le temps et/ou la pondération s'effectue avec un facteur de pondération dépendant d'une valeur de fiabilité associée à chaque donnée de position.

7. Procédé selon l'une des revendications précédentes, **caractérisé en ce que**, avant et/ou pendant la détermination de la transformation, on identifie des points aberrants dans la courbe des données de position (2) en utilisant un algorithme RANSAC et on ne les prend pas en compte lors de la détermination de la transformation.

8. Procédé selon l'une des revendications précédentes, **caractérisé en ce que** des paramètres décrivant la transformation sont lissés sur plusieurs déterminations successives de la transformation, en particulier en formant une valeur moyenne glissante.

9. Procédé selon l'une des revendications précédentes, **caractérisé en ce que** la transformation est déterminée à nouveau de manière répétée cyclique.

10. Procédé selon l'une des revendications précédentes, **caractérisé en ce que** l'intervalle de temps défini est choisi avec une longueur de 20 à 40 secondes, de préférence 30 secondes, ou de telle sorte qu'il comprend 100 à 500 instants auxquels des données de position (2) sont détectées.

11. Procédé selon l'une des revendications précédentes, **caractérisé en ce que**, avec la détermination de la transformation, on détermine aussi au moins un paramètre d'un modèle de capteur du capteur de mouvement propre (9), en particulier un paramètre décrivant l'erreur de mesure.

12. Véhicule automobile (6), comprenant un appareil de commande (7) conçu pour la mise en oeuvre d'un procédé selon l'une des revendications précédentes.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2684213 A1

**In der Beschreibung aufgeführte Nicht-Patentliteratur**

- **J. WENDEL.** Integrierte Navigationssysteme: Sensordaten, GPS und Inertiale Navigation. *Oldenbourg Wissenschafts Verlag,* 2007
- **J. FARRELL.** The Global Positioning System & Inertial Navigation. McGraw-Hill Companies, Inc, 1998
- **MARTIN A. FISCHLER ; ROBERT C. BOLLES.** Random sample consensus: a paradigm for model fitting with applications to image analysis and automated cartography. *Commun. ACM,* 1981, vol. 24 (6), 381-395